# EUROPEAN PATENT APPLICATION

(11) **EP 1 439 448 A2**
(43) Date of publication of application: **21.07.2004**
(21) Application number: 03017877.6
(22) Date of filing: 05.08.2003
(51) Int. Cl.: G06F 1/00

(54) **Electronic Device and Data Protection Method**

(30) Priority: 20.01.2003 JP 2003010859
(71) Applicant: Kabushiki Kaisha Toshiba, Tokyo (JP)
(72) Inventor: Kazawa, Hiroshi, Toshiba Corporation, 1-chome, Minato-ku, Tokyo 105-8001 (JP); Oka, Hiroyuki, Toshiba Corporation, 1-chome, Minato-ku, Tokyo 105-8001 (JP)
(74) Representative: Henkel, Feiler & Hänzel

(57) **Abstract**

A password setting unit (11) of a database system (10) manages a password set by a user in a password management table (21). A password registration unit (12) registers the set password to data in a data group (23), and records this registration in a data management table (22). A password authentication unit (13) determines whether the password inputted by the user matches the password set by the password setting unit (11), and informs a data list display unit (14) of matching if the passwords match each other. Then, the data list display unit (14) displays a list of the data group (23) with the data to which the passwords match, along with data unassigned with a data group, while data assigned to data groups in which the passwords do not match are concealed from display.

## Description

The present invention relates to a data protection technique applied to a file server and the like that can be accessed from a plurality of client computers through, e.g., a network.

Along with improvements in communications technology in recent years, apartments and the like in which a wired LAN that connects electronic devices in respective rooms to each other is provided in advance have become more common. Further, construction of a wired LAN can be readily performed. Furthermore, reflecting such a situation, electronic devices called home servers, or the like, having, e.g., a TV audiovisual function or an Internet browsing function have become more common.

This home server is set in, e.g., a living room and connected to a personal.computer in each room through the LAN. Moreover, based on a request transmitted from the personal computer through the LAN, TV broadcast program data is received and transferred through the LAN, or Web page data released on the Internet is acquired and transferred through the LAN. That is, each user can utilize the TV audiovisual function or the Internet browsing function while staying in his/her own room.

In addition, this home server is also used as a so-called file server, and a user who operates a personal computer in each room can save, e.g., picture data, video data, or music data in high volume in this file server even if each personal computer does not include a mass storage medium.

Additionally, as a function that disables access by unauthorized users to use data stored in the home server, a password function is extensively utilized (e.g., Japanese Patent Application KOKAI Publication No. 62-25364).

This password function sets an arbitrary password to'data that others are not allowed to use, requests input of the password when reading this data, and permits use of this data when the inputted password. matches. As a result, users who don't know this password can be prevented from using this data.

Meanwhile, in a prior art password function including Japanese Patent Application KOKAI Publication No. 62-25364, use of the data to which the password is set is prohibited until that password is inputted. Additionally, in Japanese Patent Application KOKAI Publication No. 62-25364, when displaying, e.g., a list of data in a specified folder, a measure to substitute a name of the data to which the password is set by a question mark "?" is further taken.

However, in the prior art password function, concealing existence itself of the data to which the password is set is not taken into consideration. Therefore, when there is data such that a given user wants to conceal from other members in his/her family, it is possible to restrict the data from being read by those other than this user, but existence itself of the data cannot be concealed from other members in the family.

In view of the above-described problems, it is an object of the present invention to provide an electronic device and a data protection method which realize concealment of existence of data, using a password.

To achieve this aim, according to the present invention provides an electronic device comprising a storing unit; a password setting unit to set a password to conceal existence of data stored in the storing unit in a plurality of groups, and to cancel concealment of the data; a registering unit to register the data stored in the storing unit to a group to which the password is set by the password setting unit; a password inputting unit to input a password; an authenticating unit to determine whether the password inputted by the password inputting unit matches the password set by the password setting unit; and a data list displaying unit to display a list of the data stored in the storing unit containing the data registered to the group associated with the password set by the password setting unit that is determined to match the password inputted by the password inputting unit by the authenticating unit, and data that is not registered to any group.

According to the present invention may provide an electronic device and a data protection method which realize concealment of existence of data, using a password.

An advantages of the invention will be set forth in the description which follows, and in part will be obvious from the description, or may be learned by practice of the invention. The advantages of the invention may be realized and obtained by means of the instrumentalities and combinations particularly pointed out hereinafter.

This summary of the invention does not necessarily describe all necessary features so that the invention may also be a sub-combination of these described features.

The invention can be more fully understood from the following detailed description when taken in conjunction with the accompanying drawings, in which:

The accompanying drawings, which are incorporated in and constitute a part of the specification, illustrate embodiments of the invention, and together with the general description given above and the detailed description of the embodiments given below, serve to explain the principles of the invention.
FIG. 1 is a view showing a structure of a home network system using an electronic device (wireless AV (audio/video) station) according to an embodiment of the present invention;
FIG. 2 is a view showing a device structure of a wireless AV station according to the embodiment;
FIG. 3 is a view showing a functional block concerning data protection of the wireless AV station according to the embodiment;
FIG. 4 is a view exemplifying a content of the password management table held by the wireless AV station according to the embodiment;
FIG. 5 is a view exemplifying a content of the data management table held by the wireless AV station according to the embodiment;
FIG. 6 is a view showing an example of an operation environment setting screen displayed by the wireless AV station according to the embodiment;
FIG. 7 is a view showing ah example of a PIN selection screen displayed by the wireless AV station according to the embodiment;
FIG. 8 is a view showing an example of a PIN setting screen displayed by the wireless AV station according to the embodiment;
FIG. 9 is a view showing an example of a password inputting screen displayed by the wireless AV station according to the embodiment;
FIG. 10 is a view showing an example of a new password inputting screen displayed by the wireless AV station according to the embodiment;
FIG. 11 is a view showing an example of a password mismatch warning screen displayed by the wireless AV station according to the embodiment;
FIG. 12 is a view showing an example of a PIN deletion screen displayed by the wireless AV station according to the embodiment;
FIG. 13 is a view showing an example of a library selection screen displayed by the wireless AV station according to the embodiment;
FIG. 14 is a, view showing an example of a PIN cancellation screen displayed by the wireless AV station according to the embodiment;
FIG. 15 is a view showing an example of a password mismatch warning screen displayed by the wireless AV station according to the embodiment;
FIG. 16 is a first view showing an example of data list display performed by the wireless AV station according to the embodiment;
FIG. 17 is a view showing an example of a PIN selection screen displayed by the wireless AV station according to the embodiment;
FIG. 18 is a view showing an example of a password inputting screen displayed by the wireless AV station according to the embodiment;
FIG. 19 is a second view showing an example of data list display performed by the wireless AV station according to the embodiment;
FIG. 20 is a view showing an example of a PIN deletion screen displayed by the wireless AV station according to the embodiment;
FIG. 21 is a third view showing an example of data list display performed by the wireless AV station according to the embodiment;
FIG. 22 is a first flowchart showing a flow of the operation of data protection executed by the wireless AV station according to the embodiment; and
FIG. 23 is a second flowchart showing a flow of the operation of data protection executed by the wireless AV station according to the embodiment.

The embodiments of the present invention will be described below with reference to the drawings.

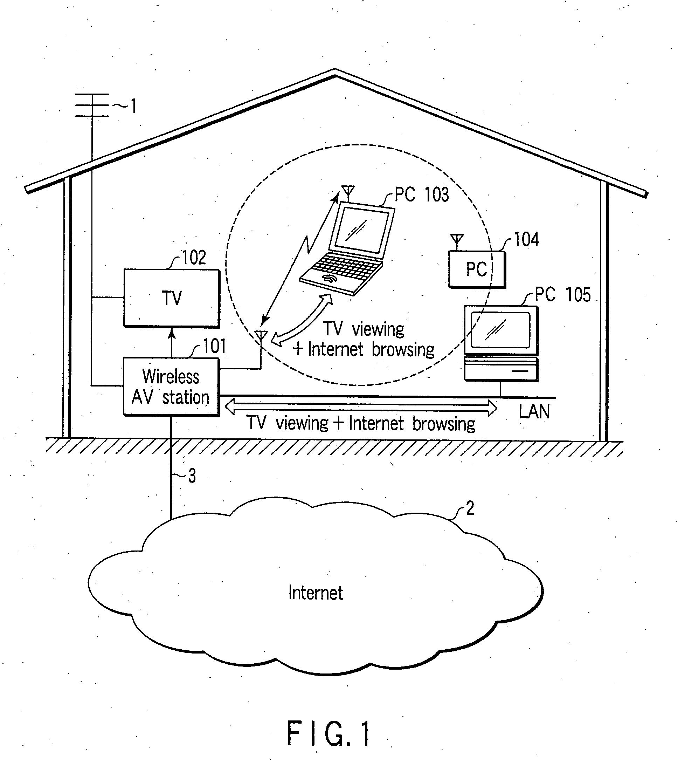

FIG. 1 shows a structure of a home network system using an electronic device (wireless AV (audio/video) station) according to the embodiment of the present invention.

This home network system is constituted by various kinds of information processing terminals and the like, such as a wireless AV station 101, a TV receiver 102, notebook personal computers 103 and 104, a desktop personal computer 105 and others. The wireless AV station 101 is a wireless sender functioning as a home network server apparatus, and provides services concerning viewing of broadcast program data by a TV broadcast or Internet browsing to respective information processing terminals such as domestic personal computers 103 or 105 by wireless.

The wireless AV station 101 is connected to an external global network (external network) such as the Internet 2, through a communication line 3, e.g., ISDN, ADSL, CATV, or the like. Further, the wireless AV station 101 is connected to various kinds of domestic information processing terminals through a wired or wireless network constituting the home network. A wireless communication device is provided for each of the notebook personal computers 103 and 104, and is connected to the wireless AV station 101 by wireless connection. Furthermore, the desktop personal computer 105 is connected to the wireless AV station 101 through a wired LAN.

The wireless AV station 101 connects the personal computers 103 to 105 to the Internet 2, and transmits/receives data to/from Web sites on the Internet 2 and the personal computers 103 to 105.

An antenna cable connected to a TV broadcast reception antenna set outside is led inside, and the TV receiver 102 and the wireless AV station 101 are connected to the antenna cable. The TV broadcast program data can be reproduced by the TV receiver 102, and also received by the wireless AV station 101. The wireless AV station 101 can transmit the received TV broadcast program data to the notebook personal computers 103 and 104 through the wireless LAN by wireless, or transmit it to the desktop personal computer 105 through the wired LAN.

That is, main functions provided by the wireless AV station 101 are as follows.

### (a) Wireless router function (Internet browsing function):

This a function is one that connects each information processing terminal capable of performing communication through the wireless LAN to the Internet 2 by wireless connection and carries out transmission/reception of data to/from Web sites on the Internet 2 and the respective information processing terminals. Using the notebook personal computers 103 and 104 connected to the wireless AV station 101 through the wireless LAN enables Internet browsing anywhere in the house by'wireless connection.

### (b) TV audiovisual function:

This function that transmits TV broadcast program data received by the wireless AV station 101 to each information processing terminal connected to the wireless AV station 101 through the wireless LAN or the wired LAN. Using the notebook personal computers 103 and 104 enables a TV broadcast program currently on air to be viewed anywhere in the house by wireless connection.

### (c) TV recording and reproducing function:

The wireless AV station 101 includes therein a hard disk drive (HDD), and a TV broadcast program can be recorded in the HDD while viewing that TV broadcast program by wireless, for example. Furthermore, TV broadcast program data recorded in the HDD can be transmitted to the information processing terminal, whilst data of another TV broadcast program data currently on air can be received and recorded in the HDD. Moreover, when TV broadcast program data recorded in the HDD is outputted to the TV receiver 102, it can be viewed by using a large screen.

### (d) Remote operation function:

The TV audiovisual function/TV recording and reproducing function and others of the wireless AV station 101 can be remotely controlled by each of the personal computers 103 to 105. Additionally, the TV audiovisual function/TV recording and reproducing function and others of the wireless AV station 101 can be controlled by using a dedicated remote control unit used to operate the wireless AV station 101.

Further, the wireless AV station 101 also provides a file server function or the like which stores data of each user of the personal computers 103 and 104. Further, when providing the file server function, the wireless AV station 101 is characterized in enabling data protection in such a manner that existence itself of data stored by a given user is concealed from other users, and this point will now be described in detail.

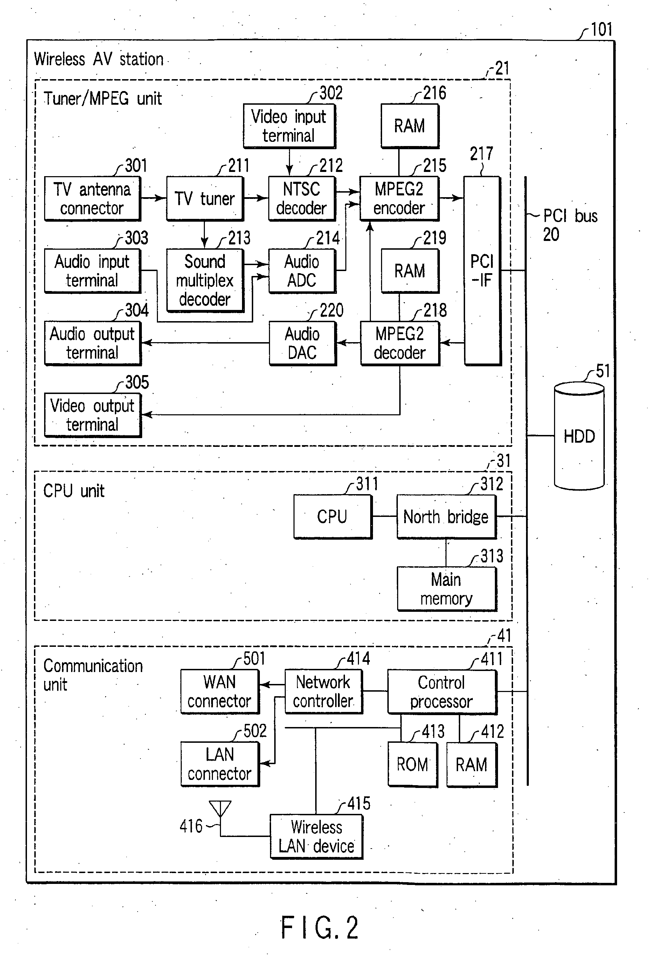

FIG. 2 is a view showing a device structure of the wireless AV station 101.

As shown in FIG. 2, the wireless AV station 101 is basically constituted of three components, i.e., a tuner/MPEG unit 21, a CPU unit 31 and a communication unit 41. Further, the tuner/MPEG unit 21, the CPU unit 31 and the communication unit 41 are respectively connected to a bus 20 such as a PCI bus, and a HDD 51 is also connected to the bus 20.

The tuner/MPEG unit 21 executes reception processing of TV broadcast program data, encoding processing, which-compresses and encodes the received TV broadcast program data, decoding processing, which decodes the compressed and encoded TV broadcast program data and others. As shown in the drawing, to the tuner/MPEG unit 21 are provided a TV tuner 211, an NTSC decoder 212, a sound multiplex decoder 213, an audio A/D converter (audio ADC) 214, an MPEG2 encoder 215, a RAM 216, a PCI bus interface (PCI-IF) 217, an MPEG2 decoder 218, a RAM 219, an audio D/A converter (audio DAC) 220, and others.

The TV tuner 211 is connected to a TV antenna cable through a TV antenna connector 301. The TV tuner 211 is used to receive TV broadcast program data of a channel requested to be viewed from the personal computers 103 to 105 or the remote control unit, and performs reception of a TV broadcast signal and channel selection. The TV tuner 211 separates the TV broadcast program data into a video signal (moving image) and an audio signal. The video signal is transmitted to the NTSC decoder 212 where this signal is converted into digital data according to needs.

The NTSC decoder 212 is also connected to a video input terminal 302, and can receive a video signal, from an external video device such as a DVD player or a VCR. A sound multiplex signal superimposed on the TV broadcast program data is demodulated by the sound multiplex decoder 213, and then transmitted to the audio A/D converter (audio ADC) 214 where this signal is converted into digital data. The audio A/D converter (audio ADC) 214 is also connected to an audio input terminal 303, and can receive an audio signal from an external video/audio device.

The MPEG2 encoder 215 compresses and encodes the inputted video and audio data, respectively. MPEG2 is used for compression and encoding. The RAM 216 is used as a working memory utilized when the MPEG2 encoder 215 executes the compression and.encoding processing. The TV broadcast program data received by the TV tuner 211 is compressed and encoded by the MPEG2 encoder 215 and converted into an MPEG2 stream.

The PCI bus interface (PCI-IF) 217 is an interface to connect,the tuner/MPEG unit 21 to the bus 20, and used to communicate with each of the CPU unit 31 and the HDD 51 through the bus 20. The PCI bus interface (PCI-IF) 217 includes a register group that the CPU unit 31 can access, and the operation of each of the TV tuner 211 and the MPEG2 encoder 215 is controlled in accordance with a command set in the register group by the CPU unit 31.

The MPEG2 decoder 218 decodes the TV broadcast program data compressed and encoded in the MPEG2 format. For example, in the case of viewing the compressed and encoded TV broadcast program data recorded in the HDD 51 by the TV receiver 102, the compressed and encoded TV broadcast program data read from the HDD 51 is transmitted to the MPEG2 decoder 218 through the PCI bus interface 217, and decoded (expanded) there. The RAM 219 is used as a working memory utilized when the MPEG2 decoder 218 executes decoding processing. The operation of the MPEG2 decoder 218 is also controlled by a command set in the register group in the PCI bus interface 217 by the CPU unit 31.

The video data decoded by the MPEG2 decoder 218 is. transmitted to the TV receiver 102 and the like through the video output terminal 305, and the audio data decoded by the MPEG2 decoder 218 is converted into an analog signal by the audio D/A converter (audio DAC) 220 according to needs and then outputted from the audio output terminal 304 to an external audio/video device.

Furthermore, in this embodiment, the TV broadcast program data decoded by the MPEG2 decoder 218 can be transmitted to the MPEG2 encoder 215 where it is again subjected to the compression and encoding processing. This process is used for down-converting processing which converts a transmission rate (bite rate) of the compressed and encoded TV broadcast program data recorded in the HDD 51 into a specific transmission rate for wireless transmission.

That is, the transmission rate (bit rate) of the TV broadcast program data obtained by the compression and encoding processing using the MPEG2 encoder 215 varies in accordance with the picture quality (low picture quality, medium picture quality and high picture quality) of the TV broadcast program data which is to be recorded in the HDD 51. When high picture quality is selected, the TV broadcast program data compressed and encoded with a very high transmission rate is recorded in the HDD 51. In this case, the TV broadcast program data cannot be transmitted in a band for wireless transmission in real time. In such a case, the down-converting processing to lower the transmission rate of the TV broadcast program data which is to be transmitted by wireless to a specific transmission rate for wireless transmission is carried out.

The CPU unit 31 controls the TV tuner 211, the MPEG2 encoder 215 and the MPEG2 decoder 218 of the tuner/MPEG unit 21, and also controls writing data into the HDD 51 and reading data from the HDD 51. Furthermore, the CPU unit 31 receives a command concerning TV viewing and transmitted from'the personal computers 103 to 105 by communication with the communication unit 41, or transmits to the communication unit 41 the TV broadcast program data to be transmitted to the personal computers 103 to 105. The CPU unit 31 is constituted by a CPU 311, a north bridge 312 connecting the CPU bus of the CPU 311 with the PCI bus 20, and a main memory 313.

The communication unit 41 is a communication control apparatus that can operate as a wireless LAN router by itself. The communication unit 41 is configured so that it can be connected to the personal computers 103 and 104 by wireless connection, and it is also connected to the personal computer 105 through the wired LAN. The communication unit 41 connects each of the personal computers 103 to 105 to the Internet 2 in response to a request transmitted from each of the personal computers 103 to 105, and transmits/receives data between the personal computers 103 to 105 and the Internet 2. In this case, all types of processing concerning transmission/reception of data between each of the personal computers 103 to 105 and the Internet 2 are executed in the communication unit 41, and the CPU unit 31 is not used.

To the communication unit 41 are provided a control processor 411, a RAM 412, a ROM 413, a network controller 414, a wireless LAN device 415, a WAN connector 510, a LAN connector 502 and others.

The WAN connector 501 is a broadband terminal used for transmission/reception of data with respect to the Internet 2, and connected to the communication line 3 through, e.g., a modem. The LAN connector 502 is connected to the domestic wired LAN.

The network controller 414 is a network control device which controls data transmission/reception with respect to the Internet 2 through the WAN connector 501 and data transmission/reception with respect to the domestic wired LAN through the LAN connector 502. The wireless LAN device 415 is a wireless communication device which performs data transmission/reception with respect to each of the personal computers 103 and 104 through the wireless LAN, and performs wireless communication with each of the personal computers 103 and 104 via the antenna 16. As the wireless LAN device 415, one conforming to the standard such as IEEE 802.11b or IEEE 802.11a is used.

The control processor 411 controls transmission/reception of data between each of the personal computers 103 to 105 and the Internet 2 by controlling the network controller 414 and the wireless LAN device 415. Specifically, the control processor 411 includes an IP masquerade function, an NAT function, a DHCP function and others as functions required to cause the communication unit 41 to operate as a wireless router. Moreover, the control processor 411 has a function to inform the CPU 311 through the PCI bus 20 of a request (command) concerning TV viewing received from the personal computers 103 and 104 through the wireless LAN device 415, or a function to inform the CPU 3-11 through the PCI bus 20 of a request (command) concerning TV viewing received from the personal computer 105 on the wired LAN via the network controller 414.

Additionally, the control processor 411 has a function to transmit the,TV broadcast program data to a personal computer, which has sent a request, through the wireless LAN device 415 or the network controller 414 when it has received the TV broadcast program data transferred from the CPU 311 through the PCI bus 20. In this case, transmission processing of the TV broadcast program data to the personal computer that has sent a request is executed concurrently with transmission/reception of data between that personal computer and the Internet 2.

For example, in cases where the TV program data requested by the personal computer 103 that can be connected to the communication unit 41 by wireless to the personal computer 103 by wireless when that personal computer 103 is performing the Internet browsing by wireless, the control processor 411 controls the wireless LAN device 415 in such a manner that content data received from the Web server on the Internet 2 and the TV broadcast program data compressed and encoded by the tuner/MPEG unit 21 are transmitted to the personal computer 103 in time division manner by wireless communication. Specifically, in the control processor 411, processing to multiplex the content data and the compressed and encoded TV broadcast program data is executed, and the multiplexed content data and TV broadcast program data are transmitted to the personal computer 103 in time division manner by wireless communication. By transmitting the content data and the TV broadcast program data to the personal computer 103 as sets of data which are independent from each other in this manner, the personal computer 103 can simultaneously display the content data and the TV broadcast program data by using application programs corresponding to those sets of data, and freely change a display position and a display size of a window of each of the content data and the TV broadcast program data by using the application programs corresponding to those sets of data.

The above-described functions of the control processor 411 are realized by firmware stored in the ROM 413.

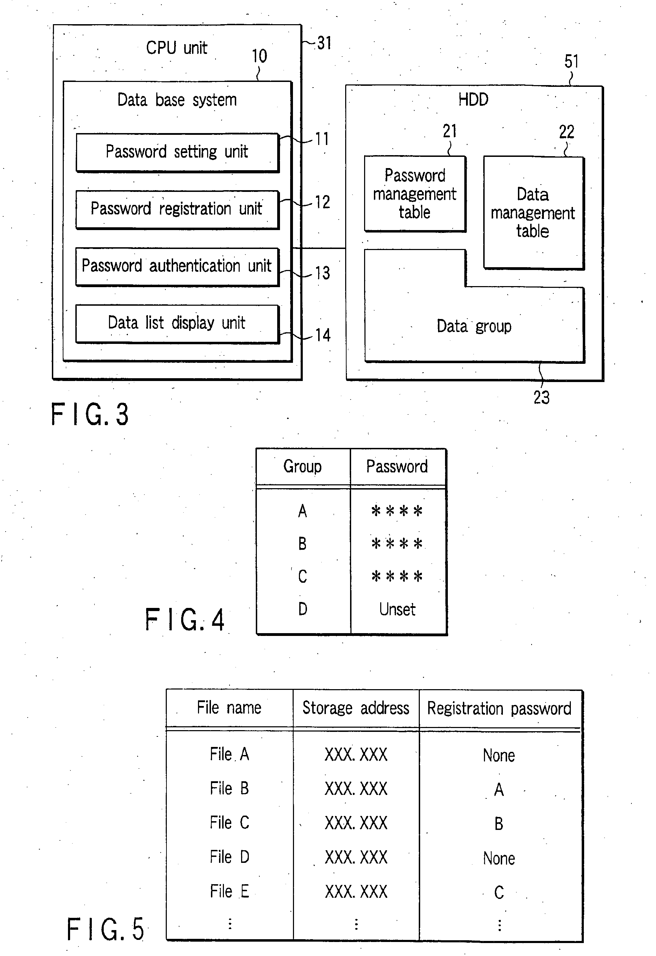

FIG. 3 shows a function block concerning data protection of the wireless AV station 101.

As shown in FIG. 3, the wireless AV station 101 has a data base system 10 including a password setting unit 11, a password registration unit 12, a password authentication unit 13 and a data list display unit 14. This data base system 10 is constituted by various kinds of programs loaded in a main memory 313 of the CPU 31 and executed by the CPU 311. It creates a password management table 21 and a data management table 22 in the HDD 51 and executes data protection relative to the data group 23 stored in the HDD 51.

This data base system 10 can execute concealment of existence of data and cancellation of this concealment in accordance with each of four groups A to D in a lump, and the password setting unit 11 sets a password for each of the four groups and stores it in the password management table 21. FIG. 4 is a view exemplifying a content of the password management table 21. In the example of FIG. 4, a password has been already set to three groups A to C and, but a password has yet to be set to group D.

The password registration unit 12 registers data to be concealed in the data group 23 stored by users of the personal computers 103 to 105 to any group whose password has been already set, and stores a registration result in the data management table 22. FIG. 5 is a view showing an-example of the content of the data management table 22, which stores therein a file name, a storage address and a registration password of each file. In the example of FIG. 5, the file A and the file D are not registered to any group, and the file B, file C and the file E are registered to the group A, the group B and the group C, respectively.

The password authentication unit 13 requests input of the password set to the group A with respect to a user who is willing to cancel concealment of existence of the data registered to, e.g., the group A in a lump, and judges whether the password inputted in response to this request matches the set password. Then, when matching of the inputted password and the set password is confirmed, the password authentication unit 13 informs the data list display unit 14 of this confirmation.

Then, when display of a data list in, e.g., a specified folder of the data group 23 is requested, the data list display unit 14 executes display of the requested data list with respect to the data which is not registered to any group and the data that confirmation of matching of its password has been informed by the password authentication unit 13. That is, the data which is registered to the group that confirmation of matching of its password has not been informed by the password authentication unit 13 is excluded from the data list display at that moment, and hence its existence itself is concealed.

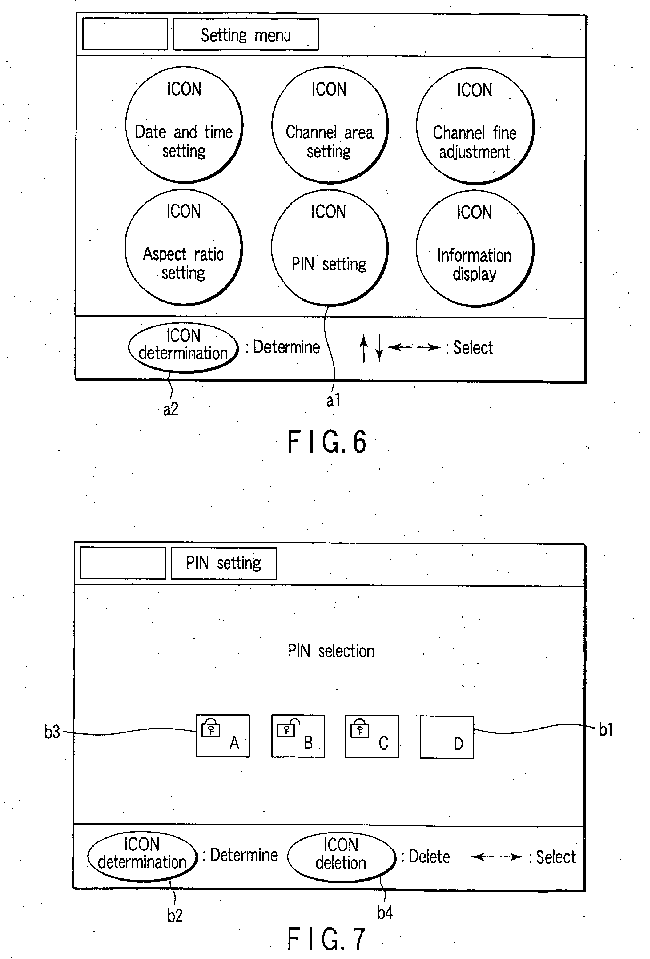

A user interface concerning data protection provided by this wireless AV station 101 will now be described with reference to FIGS. 6 to 21.

This wireless AV station 101 displays a screen shown in FIG. 6 as a screen for setting an operating environment. It is to be noted that the above-described four groups A to D will be represented as PIN (Personal Identification Number) A to D below. Further, registering data (file) to a given group (PIN) will be expressed as registering PIN to a file, or data (file). registered to a given group (PIN) will be referred to as a file to which PIN is registered below in some cases.

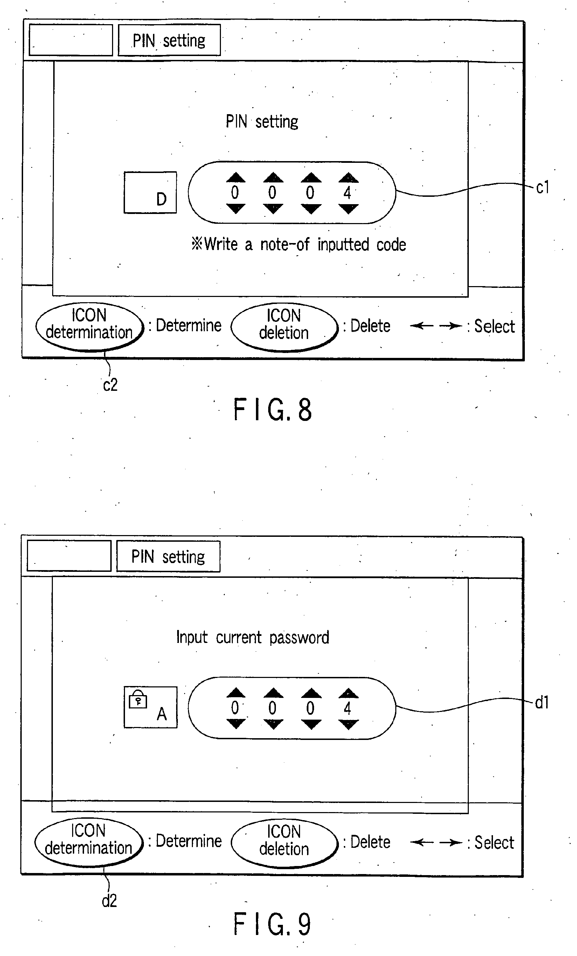

Furthermore, in the screen shown in FIG. 6, when an icon a2 is pressed with an icon a1 used to shift to setting of PIN being selected by a mouse, the password setting unit 11 of the data base system 10 displays a screen for setting the PIN shown in FIG. 7.

As shown in FIG. 4, at this moment, passwords have' been already set to three PINs, A to C and, on the other hand, a password has yet to be set for PIN D. Thus, in the case of setting a password for this PIN D, a user presses an icon b2 with an icon b1 indicative of this PIN D being selected.

When this operation is carried out, the password setting unit 11 now displays a PIN setting screen shown in FIG. 8. When this screen is displayed, the user inputs an arbitrary four-digit password in an input area c1, and selects an icon c2 after this input. Subsequently, upon receiving this operation, the password setting unit 11 stores in the password management table 21 the password inputted in the input area c1 as a password of PIN D. Then, setting of the password of PIN is terminated.

Moreover, in the case of changing the password of, e.g., PIN A, a user further selects an icon b2 with the icon b3 indicative of PIN A being selected in the screen shown in FIG. 7.

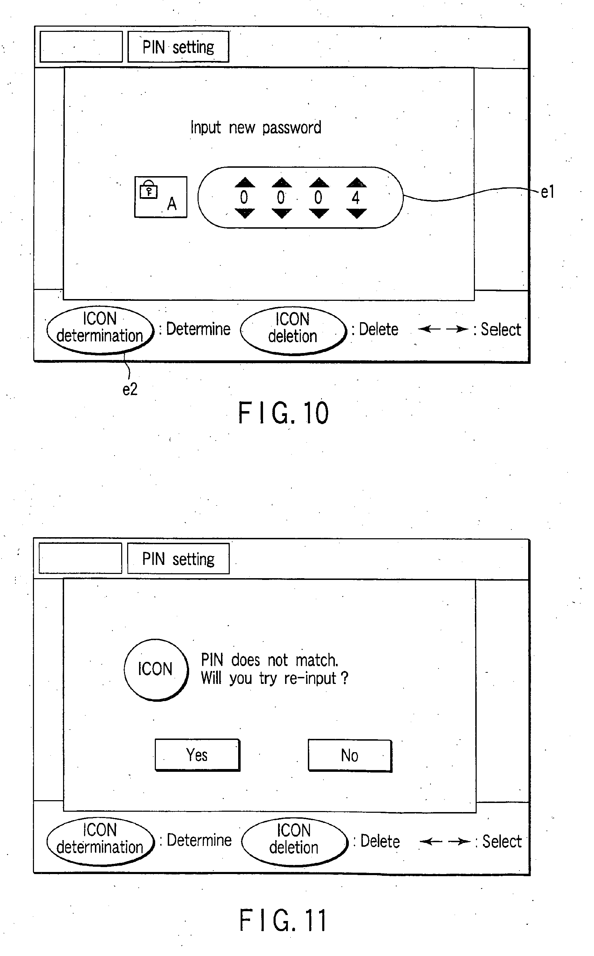

In this case, the password setting unit 11 first displays a password inputting screen shown in FIG. 9 and requests input of the current password. Then, a user inputs the current password in an input area d1 and selects an icon d2 after this input. If the inputted password matches the current password, i.e., the password stored in the password management table 21, the password setting unit 11 now displays a new password inputting screen shown in FIG. 10. On the other hand, when this screen is displayed, a user inputs a new four-digit password in an input area e1 and selects an icon e2 after this input. Then, the password setting unit 11 stores in the password management table 21 the password inputted in the input area e1 as a new password of PIN A. This terminates changing of the password of PIN.

It is to be noted that, if the password inputted in the screen shown in FIG. 9 does not match the current password, the password setting unit 11 gives a warning informing that the passwords do not match each other, and requests a direction to re-input the password or not. Then, if the direction to re-input the password is given, the screen shown in FIG. 10 is again displayed. Additionally, an upper limit is provided to the number of times of re-input of the password. When a wrong password is repeatedly inputted beyond that number of times the password setting unit 11 restricts, e.g., shifting to the PIN setting screen.

Further, in the case of deleting the password of, e.g., PIN A, a user presses an icon b4 with an icon b3 indicative of PIN A being selected in the screen shown in FIG. 7.

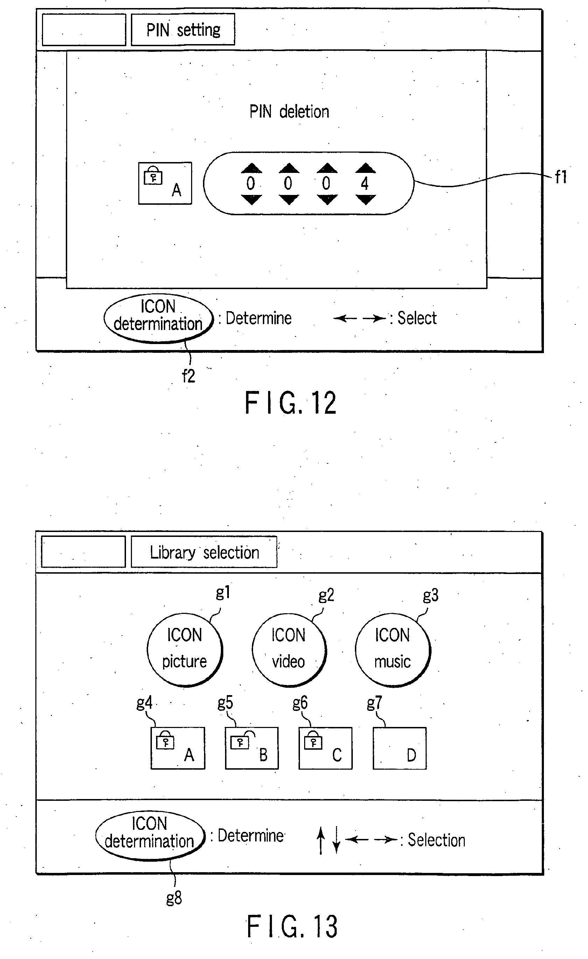

In this case, the password setting unit 11 displays a PIN deletion screen shown in FIG. 12, and requests input of the current password. Then, the user inputs the current password in an input area f1, and selects an icon f2 after this input. If this inputted password matches the current password, i.e., the password stored in the password management table 21, the password setting unit 11 deletes the password of PIN A stored in the password management table 21. This process terminates deletion of the password of PIN. It is to be noted that the procedure in cases where the passwords do not match each other is the same as that when changing the password.

Description will now be given as to how the wireless AV station 10 utilizes the password of each PIN set as described above in accordance with the operation procedure.

The data base system 10 of the wireless AV station 101 classifies the data group 23 stored in the HDD 51 into three categories, i.e., "picture", "video" and "music", and manages them. The "picture" is an aggregate of still picture data taken by, e.g., a digital camera or downloaded at the time of Internet browsing, the "video" is an aggregate of moving picture data taken by, e.g., a digital camera or downloaded at the time of Internet browsing, and the "music" is an aggregate of audio data copied from, eg., a music CD or downloaded at the time of Internet browsing.

It is to be noted that each category "picture", "video" or "music" is represented as a library hereinafter. Furthermore, the wireless AV station 101 displays a screen shown in FIG. 13 as a library selection screen.

As shown.in FIG. 13, in this screen are displayed icons g1 to g3 used to select each library "picture", "video" or "music". Moreover, icons g4 to g7 used to cancel concealment of existence of data to which PIN is registered are displayed under the icons g1 to g3. It is to be noted that FIG. 13 shows the state that existence of the data to which PIN A and PIN C are registered is concealed, concealment of existence of the data to which PIN B is registered is canceled and a password is yet to be set to PIN D.

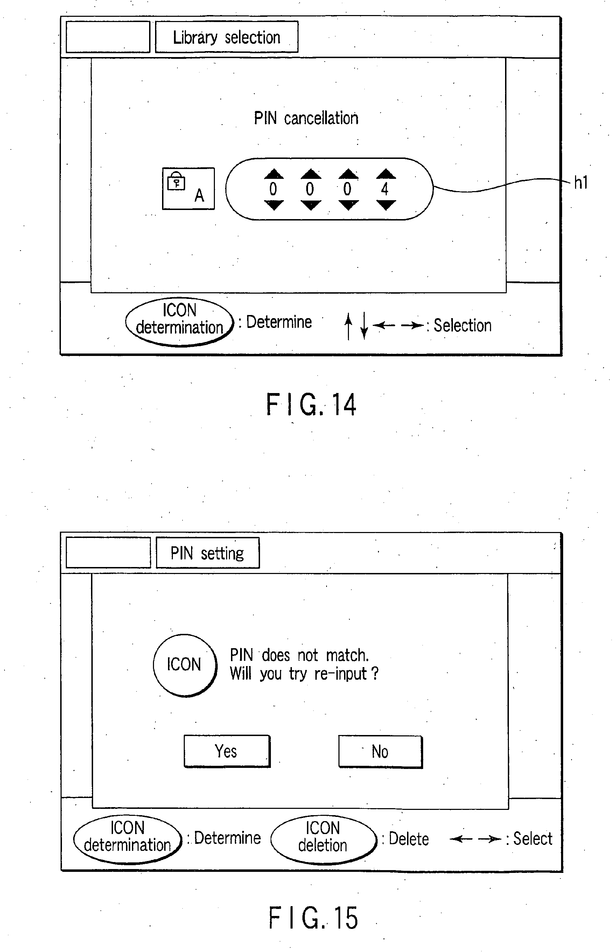

Here, it is assumed that a user is to read still picture data including data to which PIN A is registered as well as PIN B. In this case, the user first presses the icon g8 with the icon g4 being selected. Additionally, when this operation is carried out, the password authentication unit 13 of the data base system 10 displays a PIN cancellation screen shown in FIG. 14. Further, when this screen is displayed, the user inputs the current password of PIN A in an input area h1 and, on the other hand, the password authentication unit 13 checks whether the inputted password matches the current password and informs the data list display unit 14 of matching if there passwords match each other. In this case, the screen is returned to the one shown in FIG. 13. It is to be noted that, if these passwords do not match each other, the password authentication unit 13 displays a screen shown in FIG. 15, gives a warning indicative of mismatch of the passwords and requests a direction to re-input the password or not. The subsequent procedure is the same as that when changing the password or deleting the password by the password setting unit 11 shown in FIG. 11.

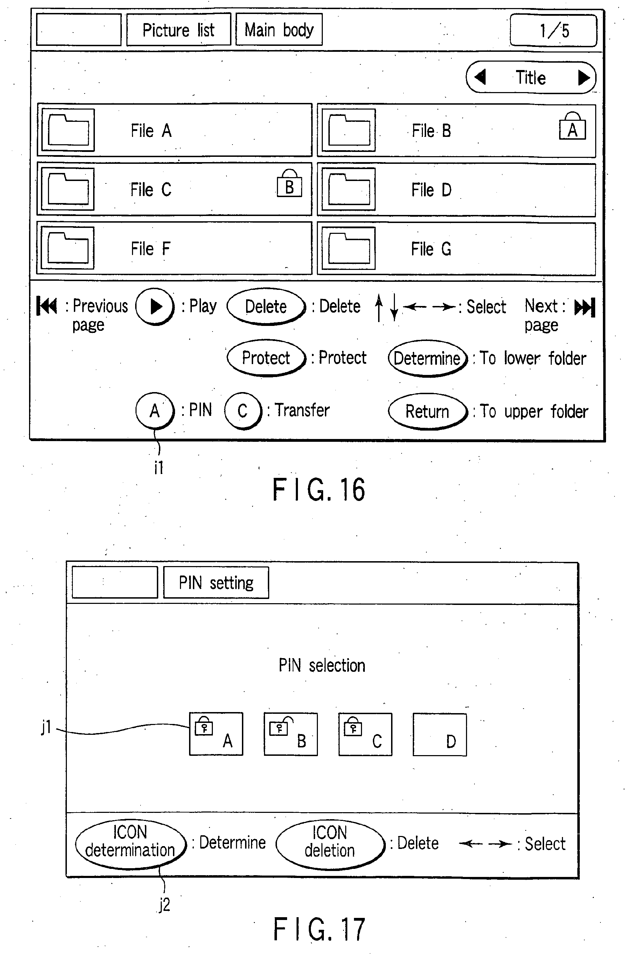

Here, it is assumed that matching of the passwords is confirmed and the screen is returned to the one shown in FIG. 13. Further, the user now presses the icon g8 with the icon g1 being selected in the screen shown in FIG. 13. Then, the data list display unit 14 of the data base system 10 executes display of a list of the data group 23 stored in the HDD 51 with the data to which no PIN is registered and the data to which either PIN A or PIN B is registered being determined as targets. FIG. 16 is a view showing an example of data list display carried out by the data list display unit 14.

Assuming that files A to E in the data management table 22 shown in FIG. 5 are still picture data belonging to the library "picture", the data list display unit 14 determines the files A and D to which no PIN is registered, the file B to which PIN A is registered and the file C to which the PIN B are registered as targets of data list display at this time. Incidentally, although not shown in FIG. 5, it is assumed that no PIN is registered to the files F and G in FIG. 16. Furthermore, a mark indicating that which PIN is registered is displayed at the right upper end part in the column of the files B and C.

That is, a user who does not know the password of, e.g., PIN C is not aware of the existence of the file E to which PIN C is registered. In other words, the user who has set the password of PIN C can conceal the existence of the file E, to which PIN C is registered, from other users.

Description will now be given as to a case that PIN A is to be registered to the file A in the files in FIG. 16 which are displayed in the form of a list. In this case, a user presses an icon i1 used to register or delete PIN with the file A being selected. Then, when this operation is carried out, the password registration unit 12 of the data base system 10 displays a PIN selection screen shown in FIG. 17. It is to be noted that, when the icon i1 is pressed, the password registration unit 12 determines registration of PIN if PIN is yet to be registered to the selected file and, on the other hand, determines deletion of PIN if PIN has been already registered. In this example, since PIN is not registered to the file A, the password registration unit 12 determines registration of PIN.

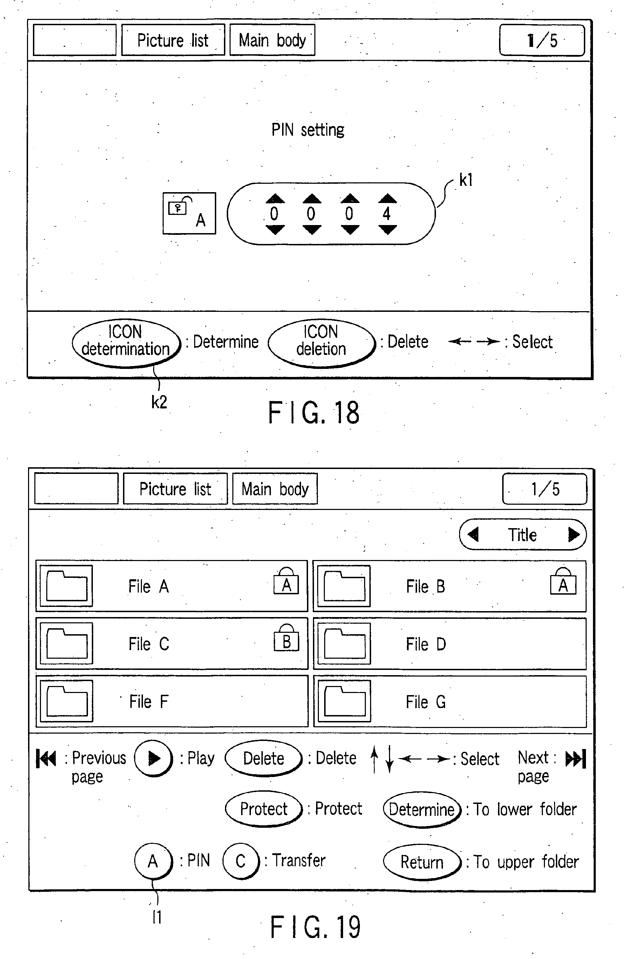

When this screen is displayed, the user presses an icon j2 with an icon j1 indicative of PIN A being selected. Furthermore, upon receiving this operation, the password registration unit 12 now displays a screen to request input of the password of PIN A, such as that shown in FIG. 18. Then, the user inputs the password of PIN A in an input area k1 in this screen and, on the other hand, the password registration unit 12 checks whether this inputted password matches the password of PIN A.

If matching of the passwords is confirmed, the password registration unit 12 records this confirmation in the data management table 22. Then, after recording, the screen is returned to a screen of data list display such as that shown in FIG. 19. As illustrated in FIG.- 19, a mark indicating that PIN A is registered is newly displayed at the right upper end part in the column of the file A.

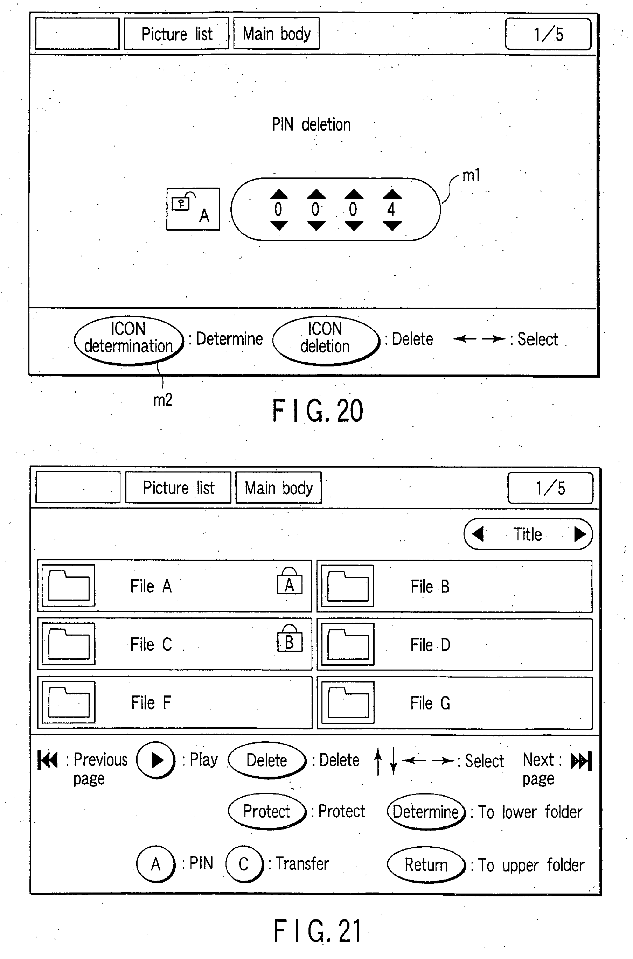

Moreover, after registering a PIN, deletion of this registration can be considered. For example, when deleting PIN A registered to the file B in the files in FIG. 19 which are displayed in the form of a list, a user presses an icon 11 with the file B being selected. Since a PIN has been already registered to this file B, the password registration unit 12 determines deletion of PIN and displays a PIN deletion screen shown in FIG. 20.

When this screen is displayed, the user inputs the password of PIN A in an input area ml of this screen. Then, the password registration unit 12 checks whether this inputted password matches the password of PIN A, and deletes PIN A recorded in the data management table if these passwords match each other.

After execution of this deletion, the screen is returned to a data list display, such as that shown in FIG. 21, and the mark indicating that a PIN is registered which has been displayed at the upper right end part in the column of the file B is deleted as shown in FIG. 21.

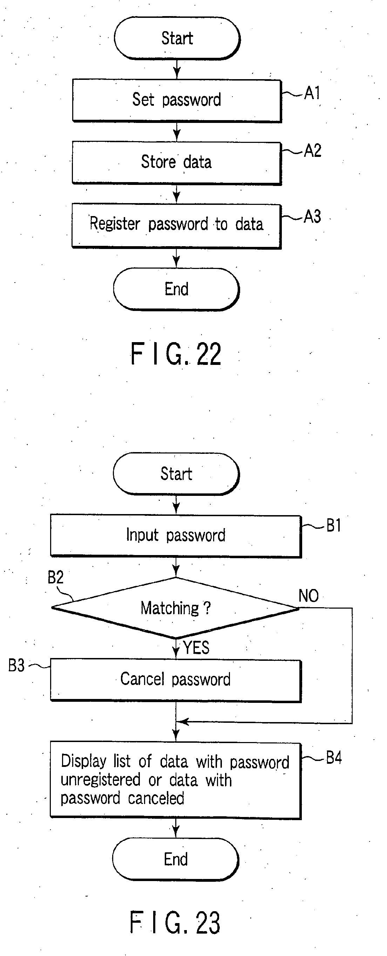

A flow of the operation of data protection executed by the wireless AV station 101 will now be described with reference to FIGS. 22 and 23.

In the case of performing data protection in the wireless AV station 101, the password of PIN is first set (step A1 in FIG. 22). Then, various kinds of data are stored in the wireless AV station (step A2 in FIG. 22), and PIN to which the password has been set is registered to data whose existence itself should be concealed among various kinds of stored data (step A3 in FIG. 22).

On the other hand, when referring to data stored in the wireless AV station 101 in this manner, a user inputs a password used to cancel concealment by using a PIN registered by the user himself/herself (step B1 in FIG. 23). If the inputted password matches the set password (YES at a step B2 in FIG. 23), concealment based on PIN is canceled (step B3 in FIG. 23). On the other hand, if the inputted password does not match the set password (NO at the step B2 in FIG. 23), concealment based on PIN is not canceled.

Thereafter, data list display is carried out with the data to which a PIN is yet to be registered and the data whose concealment based on PIN is canceled (step B4 in FIG. 23).

As described above, according to the wireless AV station 101, registering a PIN having a password being set thereto to the data enables existence of that data to be concealed from other users.

It is to be noted that the example of setting the password by using a four-digit figure has been described in the foregoing embodiment, but the present invention is not restricted thereto, and alphabets, symbols or a combination'of keys which are simultaneously pressed may be adopted. Moreover, a user may set types of characters which can be utilized as passwords.

Additionally, as a method of inputting a password, audio input using a microphone may be used if the wireless AV station includes, e.g., a voice recognition function as well as a keyboard.

## Claims

1. An electronic device **characterized by** comprising:
storing means (51);
password setting means (11) for setting a password to conceal existence of data stored in the storing means in a plurality of groups, and to cancel concealment of the data;
registering means (12) for registering the data stored in the storing means to a group to which the password is set by the password setting means;
password inputting means for inputting a password;
authenticating means (13) for determining whether the password inputted by the password inputting means matches the password set by the password setting means; and
data list displaying means (14) for displaying a list of the data stored in the storing means containing the data registered to the group associated with the password set by the password setting means that is determined to match the password inputted by the password inputting means by the authenticating unit, and data that is not registered to any group.

2. The electronic device according to claim 1, **characterized in that** the password setting means has type setting means for setting types of characters utilized as passwords.

3. The electronic device according to claim 1, **characterized in that** the password setting means includes combination setting means for setting a combination of at least two operation keys that are simultaneously keyed as a password.

4. The electronic device according to claim 1, **characterized in that** the password inputting means is a voice inputting unit.

5. A data protection method of an electronic device having a storing means, **characterized by** comprising the steps of:
setting (A1) a password to conceal existence of data stored in the storing means in a plurality.of groups, and to cancel concealment of the data;
registering (A3) the data stored in the storing means to a group to which the password is set;
inputting (B1) a password;
determining (B2) whether the inputted password matches the set password; and
displaying (B4) a list of the data stored in the storing means containing the data registered to the group associated with the set password that is determined to match the inputted password, and data that is not registered to any group.
